# EUROPEAN PATENT APPLICATION

(11) **EP 2 154 599 A2**
(43) Date of publication of application: **17.02.2010**
(21) Application number: 09166214.8
(22) Date of filing: 23.07.2009
(51) Int. Cl.: G06F 3/048

(54) **Information processing apparatus, method, and program**

(30) Priority: 11.08.2008 JP 2008206623
(71) Applicant: Sony Corporation, Tokyo 108-0075 (JP)
(72) Inventor: Iwase, Ayako, TOKYO 108-0075 (JP); Ozawa, Hiroyuki, TOKYO 108-0075 (JP); Takaoka, Ryo, TOKYO 108-0075 (JP); Akagawa, Satoshi, TOKYO 108-0075 (JP)
(74) Representative: Körber, Martin Hans

(57) **Abstract**

An information processing apparatus includes: touch screen means including a touch panel and a panel; and display control means for performing display control of displaying a symbol representing a first function in a first area of the touch screen means when the touch screen means detects that the first area is touched, whereas displaying a symbol representing a second function in a second area of the touch screen means when the touch screen means detects that the second area is touched with the first area remaining being touched.

## Description

### BACKGROUND OF THE INVENTION

### 1. FIELD OF THE INVENTION

The present invention relates to an information processing apparatus, method, and program, and particularly to an information processing apparatus, method, and program capable of easily setting imaging-related functions.

### 2. DESCRIPTION OF THE RELATED ART

A digital camera has a plurality of imaging-related functions. To set any of the functions when a digital camera is used to capture an image, a user has conventionally carried out the following operation: That is, the user selects an icon representing a function that the user desires to perform. The digital camera then displays an image showing details of the function selected through the icon. The user sets the details of the function while viewing the image. The user carries out the operation described above by using a finger to press hardware buttons or software buttons (when a touch panel-equipped model is used).

### SUMMARY OF THE INVENTION

In a recent multi-functional digital camera, however, forcing the user to whom information on a large number of functions is presented all at once to carry out the function setting operation described above is cumbersome for the user in some cases.

Therefore, the user may not be able to set a desired function, or it may takes a long time for the user to set the function.

Thus, it is desirable to simplify the operation of setting imaging-related functions.

An information processing apparatus according to an embodiment of the invention includes touch screen means including a touch panel and a panel, and display control means for performing display control of displaying a symbol representing a first function in a first area of the touch screen means when the touch screen means detects that the first area is touched, whereas displaying a symbol representing a second function in a second area of the touch screen means when the touch screen means detects that the second area is touched with the first area remaining being touched.

It is preferred that the display area of the touch screen means is divided into an upper right area, an upper left area, a lower right area, and a lower left area, and the lower right area is the first area and the lower left area is the second area.

It is preferred that the display control means performs the display control of displaying the symbol representing the first or second function when the first or second area remains being touched at least for a predetermined period.

It is preferred that the display control means further performs the display control of deleting the displayed symbol representing the first function when a first deleting condition is satisfied, whereas deleting the displayed symbol representing the second function when a second deleting condition is satisfied.

It is preferred that the second deleting condition includes a condition that the symbol representing the first function is deleted.

It is preferred that the first function is a set of a plurality of functions and the symbol representing the first function includes first function cards for the respective plurality of functions, each of the first function cards being an object mimicking a card representing a predetermined function, and the second function is a set of a plurality of functions and the symbol representing the second function includes second function cards for the respective plurality of functions, each of the second function cards being an object mimicking a card representing a predetermined function.

It is preferred that the information processing apparatus further includes function setting means. When a card used to carry out a function setting operation is selected on the touch screen means from the plurality of first function cards and the plurality of second function cards and then a setting operation instructing the touch screen means to set a function identified by the card, the function setting means set the function, and the display control means further performs the display control, when the setting operation is performed, of displaying an image in which the selected card is turned over on the touch screen means.

It is preferred that the setting operation is a finger's single tapping operation performed on the selected card or an operation of narrowing the distance between two fingers that touch the selected card.

It is preferred that the information processing apparatus further includes touch panel means disposed on the opposite surface of the information processing apparatus to the surface on which the touch screen means is disposed, and the setting operation is a finger's single tapping operation performed on the touch panel means.

An information processing method and program according to another embodiments of the invention are a method and program corresponding to the information processing apparatus according to the embodiment of the invention described above.

In the information processing apparatus, method, and program according to the embodiments of the invention, the following control is made on a touch screen formed of a touch panel and a panel. That is, a symbol representing a first function is displayed in a first area of the touch screen when the touch screen detects that the first area is touched, whereas a symbol representing a second function is displayed in a second area of the touch screen when the touch screen detects that the second area is touched with the first area remaining being touched.

As described above, the invention allows a function setting operation to be readily carried out. In particular, employing an imaging apparatus including a touch screen as an information processing apparatus allows an imaging-related function setting operation to be readily carried out.

### BRIEF DESCRIPTION OF THE DRAWINGS

Fig. 1 is a block diagram showing an exemplary configuration of an imaging apparatus as an embodiment of an information processing apparatus to which the invention is applied;
Figs. 2A and 2B are perspective views showing an exemplary exterior configuration of the imaging apparatus shown in Fig. 1;
Fig. 3 describes an exemplary operation of calling basic functions of the imaging apparatus;
Fig. 4 describes an exemplary operation of calling basic functions of the imaging apparatus;
Fig. 5 describes an exemplary operation of calling application functions of the imaging apparatus;
Fig. 6 describes an exemplary operation of calling application functions of the imaging apparatus;
Fig. 7 is a flowchart describing an exemplary basic function calling process;
Fig. 8 is a flowchart describing an exemplary application function calling process;
Fig. 9 describes an exemplary operation of calling a basic function and an application function of the imaging apparatus;
Figs. 10A to 10C describe an exemplary operation of setting a basic function;
Fig. 11 is a flowchart describing an exemplary set function changing process;
Figs. 12A to 12C describe another example of the operation of setting a basic function;
Figs. 13A and 13B describe another example of the operation of setting a basic function; and
Fig. 14 is a block diagram showing an exemplary configuration of an information processing apparatus to which the invention is applied, which is different from the configuration shown in Fig. 1.

### DESCRIPTION OF THE PREFERRED EMBODIMENTS

An embodiment of the invention will be described below with reference to the drawings.

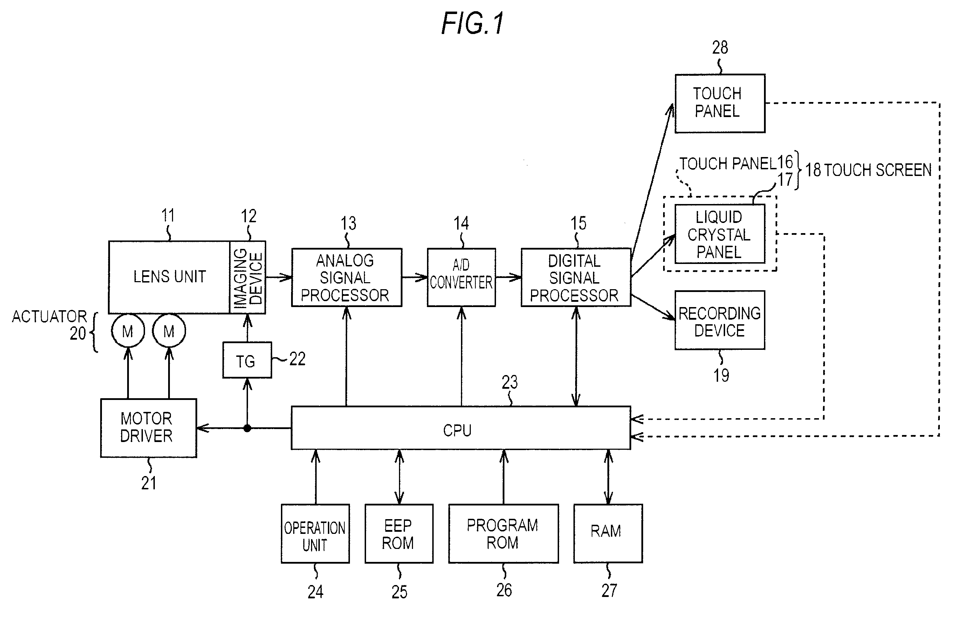

Fig. 1 is a block diagram showing an exemplary configuration of an imaging apparatus as an embodiment of an information processing apparatus to which the invention is applied.

In the example shown in Fig. 1, the imaging apparatus includes a lens unit 11 through a touch panel 28.

The lens unit 11 includes an imaging lens, a diaphragm, and a focus lens. An imaging device 12, such as a CCD (Charge Coupled Device), is disposed on the optical path along which subject light incident through the lens unit 11 travels.

The imaging device 12, an analog signal processor 13, an A/D (Analog/Digital) converter 14, and a digital signal processor 15 are connected to each other in this order.

The digital signal processor 15 is connected to a liquid crystal panel 17, a recording device 19, and a touch panel 28.

The lens unit 11 is connected to an actuator 20 for adjusting the diaphragm, which is part of the lens unit 11, and moving the focus lens, which is part of the lens unit 11. The actuator 20 is also connected to a motor driver 21. The motor driver 21 drives and controls the actuator 20.

A CPU (Central Processing Unit) 23 controls the entire imaging apparatus. To this end, the CPU 23 is connected to the analog signal processor 13, the A/D converter 14, the digital signal processor 15, the motor driver 21, a TG (Timing Generator) 22, an operation unit 24, an EEPROM (Electrically Erasable Programmable ROM) 25, a program ROM (Read Only Memory) 26, a RAM (Random Access Memory) 27, a touch panel 16, and the touch panel 28.

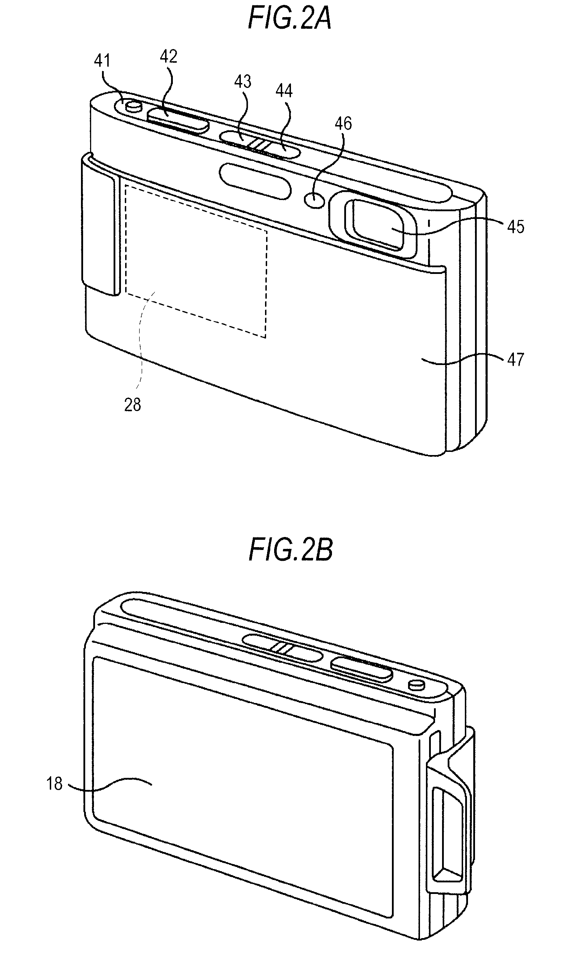

A touch screen 18 includes the touch panel 16 and the liquid crystal panel 17. The touch panel 28 is disposed on the opposite side of the imaging apparatus to the touch screen 18, that is, on the imaging lens side (see Figs. 2A and 2B, which will be described later).

The recording device 19 is formed of, for example, a DVD (Digital Versatile Disc) or any other similar optical disc, a memory card or any other similar semiconductor memory, or any other suitable removable recording medium. The recording device 19 can be freely attached and detached to and from a body of the imaging apparatus.

The EEPROM 25 stores a variety of types of information that has been set. The EEPROM 25 further stores other information, for example, information that should be held when the power is turned off.

The program ROM 26 stores programs to be executed by the CPU 23 and data necessary for the CPU 23 to execute the programs.

The RAM 27 serves as a work area used when the CPU 23 carries out a variety of processes, and temporarily stores necessary programs and data.

The actions of the entire imaging apparatus having the configuration shown in Fig.1 will be described below in summary.

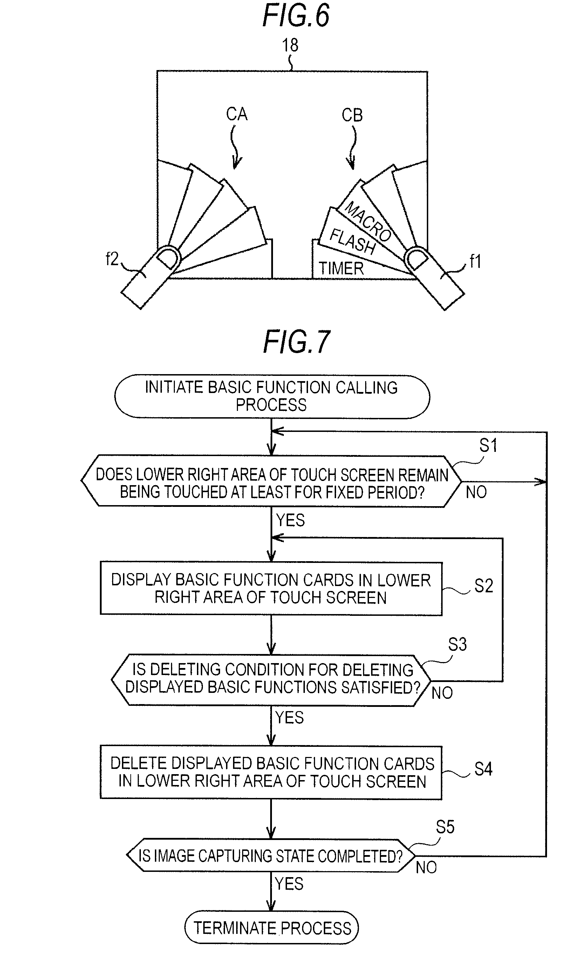

The CPU 23 controls the components that form the imaging apparatus by executing the programs recorded in the program ROM 26. The CPU 23 carries out predetermined processes in response to signals from the touch panel 16 or the touch panel 28 and signals from the operation unit 24. Specific examples of the processes will be described later with reference to the flowcharts shown in Figs. 7, 8, and 11.

A user operates the operation unit 24, which in turn provides the CPU 23 with a signal corresponding to the operation.

That is, the touch screen 18 or the touch panel 28, when touched, for example, with a finger at an arbitrary position, in other words, when the user carries out a predetermined input operation, detects the coordinates of the touched position. An electric signal representing the detected coordinates (hereinafter referred to as a coordinate signal) is sent to the CPU 23. The CPU 23 derives the coordinates of the touched position from the coordinate signal, acquires predetermined information related to the coordinates, and carries out a predetermined process based on the information.

The touch used herein includes not only static touch (touching only a single predetermined area) but also dynamic touch (touch that occurs when a finger or any other touching object follows a predetermined path). For example, opening a folding fan on an image or any other similar tracing operation performed by a finger is one form of the touch.

The actuator 20 is driven to pull the lens unit 11 out of a housing of the imaging apparatus and push the lens unit 11 into the housing. Further, the actuator 20 is driven to adjust the diaphragm, which is part of the lens unit 11, and move the focus lens, which is part of the lens unit 11.

The TG 22 provides the imaging device 12 with a timing signal under the control of the CPU 23. The timing signal controls the exposure period and other parameters in the imaging device 12.

The imaging device 12 operates based on the timing signal provided from the TG 22 and receives subject light incident through the lens unit 11, and the subject light then undergoes photoelectric conversion. The imaging device 12 then provides the analog signal processor 13 with an analog image signal according to the amount of received light. In this process, the motor driver 21 drives the actuator 20 under the control of the CPU 23.

The analog signal processor 13 carries out amplification and other analog signal processing on the analog image signal provided from the imaging device 12. The analog signal processor 13 provides the A/D converter 14 with the resultant analog image signal.

The A/D converter 14 converts the analog image signal from the analog signal processor 13 into a digital image signal under the control of the CPU 23. The A/D converter 14 provides the digital signal processor 15 with the resultant digital image signal.

The digital signal processor 15 carries out noise removal and other digital signal processing on the digital image signal provided from the A/D converter 14 under the control of the CPU 23. The digital signal processor 15 displays an image corresponding to the digital image signal on the liquid crystal panel 17.

Further, the digital signal processor 15 compresses and encodes the digital image signal provided from the A/D converter 14 in accordance with a predetermined compression and encoding scheme, for example, JPEG (Joint Photographic Experts Group). The digital signal processor 15 records the compressed and encoded digital image signal in the recording device 19.

The digital signal processor 15 also reads the compressed and encoded digital image signal from the recording device 19 and decompresses and decodes the signal in accordance with a decompression and decoding scheme corresponding to the predetermined compression and encoding scheme. The digital signal processor 15 displays an image corresponding to the digital image signal on the liquid crystal panel 17.

Additionally, the digital signal processor 15 produces a frame image used to perform an AF (auto focus) function (hereinafter referred to as an AF frame) on the liquid crystal panel 17 under the control of the CPU 23.

That is, an image captured by the imaging device 12 is displayed on the liquid crystal panel 17. In this case, the AF frame is set on the image displayed on the liquid crystal panel 17. The focus control is carried out based on the image within the AF frame.

As described above, the imaging apparatus has the AF function. The AF function includes not only the focus control function but also the function of setting the AF frame in an arbitrary position on the image displayed on the liquid crystal panel 17. The AF function further includes a function of controlling the position, the size, and other parameters of the AF frame only by operating the touch screen 18 formed of the liquid crystal panel 17 and the touch panel 16.

To perform the AF function, the CPU 23 reads a program in the program ROM 26 and executes the program. The imaging apparatus further has an AE (Automatic Exposure) function and an AWB (Auto White Balance) function. These functions are also performed by instructing the CPU 23 to read programs in the program ROM 26 and execute them.

More specifically, the AF function, the AE function, and the AWB function are presented only by way of example of the functions provided in the imaging apparatus. That is, the imaging apparatus has a variety of imaging-related functions.

In the following description, among the variety of functions, imaging-related basic functions are referred to as basic functions, and imaging-related application functions are referred to as application functions. In other words, the basic functions are those frequently used, whereas the application functions are those less frequently used than the basic functions.

The basic functions include not only the AF function, the AE function, and the AWB function described above but also "zoomed imaging," "automatic imaging," "flash setting," "scene imaging," "timer imaging," and "macro imaging." A reproducing function that allows an image capturing screen to transition to an image reproducing screen can also be one of the basic functions.

On the other hand, the application functions include "video imaging," "WB imaging," "EV setting," "ISO setting," and "continuous imaging setting."

How frequently each of the functions is used depends on individual users. Therefore, users may customize which function is classified into the basic or application functions.

Figs. 2A and 2B are perspective views showing an exemplary exterior configuration of the imaging apparatus in the example shown in Fig. 1.

In the following description, among the surfaces of the imaging apparatus, the surface facing a subject to be imaged by the user, that is, the surface through which the lens unit 11 is disposed, is referred to as a front surface. On the other hand, among the surfaces of the imaging apparatus, the surface facing the user who images the subject, that is, the surface on the side that is opposite the front surface, is referred to as a rear surface. Among the surfaces of the imaging apparatus, the surface disposed on the upper side and the surface disposed on the lower side when the user images the subject are referred to as an upper surface and a lower surface, respectively.

Fig. 2A is a perspective view showing an exemplary exterior configuration of the front surface of the imaging apparatus, and Fig. 2B is a perspective view showing an exemplary exterior configuration of the rear surface of the imaging apparatus.

The front surface of the imaging apparatus can be covered with a lens cover 47. Fig. 2A shows the state after the lens cover 47 on the front surface is slid downward and opened. As shown in Fig. 2A, an imaging lens 45 incorporated in the lens unit 11 and an AF illuminator 46 are disposed in this order in the right-to-left direction in an upper front portion from which the lens cover 47 is removed. The touch panel 28 is disposed in a lower front portion that is covered with the lens cover 47 and where the user holds the imaging apparatus when the user images a subject.

The AF illuminator 46 also serves as a self-timer lamp. On the upper surface of the imaging apparatus are disposed a zoom lever (TELE/WIDE) 41, a shutter button 42, a playback button 43, and a power button 44 in this order from the left-to-right direction in Fig. 2A. The zoom lever 41, the shutter button 42, the playback button 43, and the power button 44 are part of the operation unit 24 shown in Fig. 1.

As shown in Fig. 2B, the touch screen 18 is disposed over the rear surface of the imaging apparatus.

Since the touch screen 18 is thus disposed on the rear surface of the imaging apparatus, the user, when imaging a subject, can uses the touch screen 18 to manipulate a GUI (Graphical User Interface) with the front surface of the imaging apparatus remaining facing the subject.

In the present embodiment, for example, any of the basic functions described above can be set by using the touch screen 18 to manipulate the GUI.

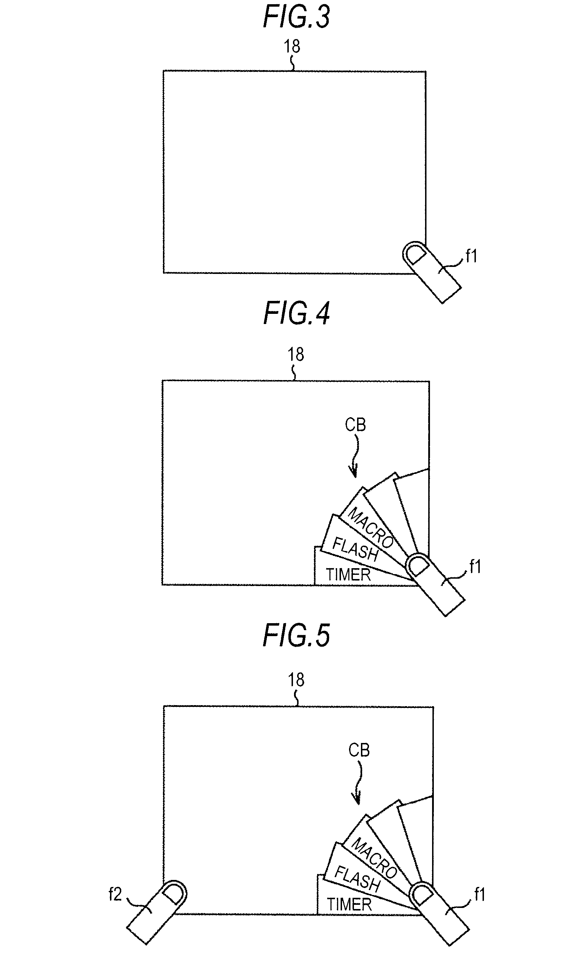

There is a plurality of basic functions that can be set. The user sets a desired one of the plurality of basic functions. To this end, it is necessary to device a method of allowing the user to view what the plurality of basic functions are and readily select a desired one of the plurality of functions. For example, symbols representing the basic functions are displayed on the touch screen 18. The forms of the symbols are not limited to specific ones. For example, in the present embodiment, a card with the name of a basic function displayed thereon is prepared for each of the plurality of basic functions, and an object mimicking the card (hereinafter simply abbreviated to a basic function card) is displayed on the touch screen 18 (see Fig. 4, which will be described later).

The location where the basic function cards are displayed is not limited to a specific location. It is, however, preferable that the basic function cards are displayed at a location where the user can readily manipulate the cards, that is, a location where the user can readily touch the cards with a finger when a subject is being imaged. Specifically, in the present embodiment, for example, the plurality of basic function cards is collectively displayed in a lower right area of the touch screen (see Fig. 4, which will be described later) . It is, of course, noted that the basic function cards may be displayed in a lower left area of the touch screen 18.

In the following description, a transition from the state in which none of the plurality of basic function cards is displayed on the touch screen 18 to the state in which the basic function cards are displayed is referred to as a basic function call. An exemplary operation of calling of the basic functions will be described with reference to Figs. 3 and 4.

In the state of display on the touch screen 18 shown in Fig. 3, that is, in the state in which none of the basic function cards is displayed on the touch screen 18, the user touches a lower right area of the touch screen 18 of the imaging apparatus with a finger f1.

When the finger f1 remains touching the area at least for a predetermined period, the state of display on the touch screen 18 transitions from the state shown in Fig. 3 to the state shown in Fig. 4. That is, a plurality of basic function cards CB overlapping with each other in the form of a fan is displayed in the lower right area of the touch screen 18, as shown in Fig. 4. Each of the basic function cards CB is related to a single predetermined basic function. A single basic function card CB therefore has the name of the related basic function displayed thereon. As a result, the user only needs to view the name (text) displayed on the basic function card CB and can immediately identify the basic function related to the card.

The basic function cards CB remain displayed unless a deleting condition for deleting the displayed basic functions is satisfied. A specific example of the deleting condition for deleting the displayed basic functions will be described later.

The imaging apparatus 1 shown in Fig. 1 has not only the basic functions but also application functions as described above. There is a plurality of application functions that can be set. The user sets a desired one of the plurality of application functions. To this end, it is necessary to device a method of allowing the user to view what the plurality of application functions are and readily select a desired one of the plurality of functions. For example, symbols representing the application functions are displayed on the touch screen 18. The forms of the symbols are not limited to specific ones. For example, in the present embodiment, a card with the name of an application function displayed thereon is prepared for each of the plurality of application functions, and an object mimicking the card (hereinafter simply abbreviated to an application function card) is displayed on the touch screen 18 (see Fig. 6, which will be described later), as in the case of the basic functions.

The location where the application function cards are displayed is not limited to a specific location. It is, however, preferable that the application function cards are displayed at a location where the user can readily manipulate the cards, that is, a location where the user can readily touch the cards with a finger when a subject is being imaged. It is further preferable that the basic function cards and the application function cards are displayed to be clearly distinguished from each other. Specifically, in the present embodiment, for example, the plurality of application function cards is collectively displayed on the side that is opposite the side on which plurality of basic function cards CB are displayed, that is, in a lower left area of the touch screen (see Fig. 6, which will be described later). It is, of course, noted that the application function cards may be displayed in a lower right area of the touch screen 18 when the plurality of basic function cards CB is collectively displayed in a lower left area of the touch screen.

In the following description, a transition from the state in which none of the plurality of application function cards is displayed on the touch screen 18 to the state in which the application function cards are displayed is referred to as an application function call. An exemplary operation of calling of the application functions will be described with reference to Figs. 5 and 6.

The relationship between the basic functions and the application functions is not limited to a specific one. Examples of the relationship may include the following first and second relationships. In the first relationship, the basic functions and the application functions are independent of each other from the viewpoint of functionality. In the second relationship, more detailed functions of the basic functions are defined in the application functions. That is, in the second relationship, a basic function and an application function set a single complete function. The second relationship is employed in the present embodiment.

In this case, since the application functions are based on the basic functions, it is assumed that the basic function cards CB need to be displayed to display the application function cards. That is, the initial state of display on the touch screen 18 before the application function call is carried out is the state shown in Fig. 4.

In the initial state, that is, in the state in which the basic function cards CB are displayed on the touch screen 18 (but no application function card is displayed), the user touches a lower left area of the touch screen 18 of the imaging apparatus with a finger f2 that differs from the finger f1, as shown in Fig. 5. The reason why the description "a finger f2 that differs from the finger f1" is made is that the deleting condition for deleting the displayed basic functions is satisfied if the finger f1 is released from the touch screen 18. That is, the basic function cards CB are deleted, and the prerequisite for displaying the application function cards is no longer present.

When the finger f2 remains touching the area at least for a predetermined period, the state of display on the touch screen 18 transitions from the state shown in Fig. 5 to the state shown in Fig. 6. That is, a plurality of application function cards CA overlapping with each other in the form of a fan is displayed in the lower left area of the touch screen 18, as shown in Fig. 6. Each of the application function cards CA is related to a single predetermined application function. A single application function card CA therefore has the name of the related application function displayed thereon. As a result, the user only needs to view the name (text) displayed on the application function card CA and can immediately identify the application function related to the card.

The application function cards CA remain displayed unless the deleting condition for deleting the displayed basic functions or a deleting condition for deleting the displayed application functions is satisfied. Deleting the basic function cards CB can be excluded from the deleting conditions for deleting the displayed application functions. This can be understood as follows: the application function cards CA remain displayed unless the deleting condition for deleting the displayed application functions is satisfied. The deleting condition for deleting the displayed basic functions and the deleting condition for deleting the displayed application functions will be described later.

As described above, a basic function can be called through an operation using only the finger f1, that is, only one hand. In contrast, an operation using the fingers f1 and f2 is necessary to call an application function. That is, when the user calls an application function while holding the imaging apparatus with both hands, an operation using the finger f1 of the right hand and the finger f2 of the left hand, that is, both hands, is necessary. The basic functions, which are frequently set, can be clearly distinguished from the application functions, which are less frequently set, by thus clearly differentiating the basic function calling operation from the application function calling operation.

That is, the user can readily set a desired function with the basic functions, which are frequently set, and the application functions, which are less frequently set, concurrently presented.

Among the processes carried out in the imaging apparatus shown in Fig. 1, a description will be made of a process of calling a basic function (hereinafter referred to as a basic function calling process) and a process of calling an application function (hereinafter referred to as an application function calling process).

Fig. 7 is a flowchart describing an example of the basic function calling process.

In the following description, among the states of the imaging apparatus actions, the state in which captured image data is ready to be recorded in the recording device 19, that is, the state in which pressing the shutter button 42 immediately initiates the recording operation, is referred to as an image capturing state. When the state of the imaging apparatus action transitions to the image capturing state, the basic function calling process is initiated.

That is, in the step S1, the CPU 23 judges whether or not a lower right area of the touch screen 18 remains being touched at least for a predetermined period.

That is, when the state shown in Fig. 3 continues at least for a predetermined period, specifically, when the user' finger f1 keeps touching a lower right area of the touch screen 18 at least for a predetermined period, the CPU 23 keeps receiving a coordinate signal for the predetermined period from the touch panel 16, which forms the touch screen 18.

Therefore, unless the CPU 23 keeps receiving the coordinate signal for the predetermined period, the judgment in the step S1 is NO and the control returns to the process in the step S1. The process in the step S1 and the following processes are then repeated.

Thereafter, when the CPU 23 keeps receiving the coordinate signal for the predetermined period from the touch panel 16, which forms the touch screen 18, the judgment in the step S1 is YES, that is, it is judged that the lower right area of the touch screen 18 remains being touched at least for the predetermined period, and the control proceeds to the process in the step S2.

In the step S2, the CPU 23 controls the digital signal processor 15 to display the basic function cards CB in the lower right area of the touch screen 18. That is, the state of display on the touch screen 18 transitions from the state shown in Fig. 3 to the state shown in Fig. 4.

In the step S3, the CPU 23 judges whether or not the deleting condition for deleting the displayed basic functions is satisfied.

The deleting condition for deleting the displayed basic functions is not limited to a specific one. For example, the deleting condition employed in the present embodiment is satisfied when at least one of the following first to third conditions is satisfied.

A first condition is defined as follows: The user presses the shutter button 42 with the basic function cards CB displayed.

A second condition is defined as follows: The user touches a monitoring screen area of the touch screen 18 except the area where the basic function cards CB or (and) the application function cards CA are displayed.

A third condition is defined as follows: The touch screen 18 does not detect that the finger f1 has touched a lower left area of the touch screen 18 for a predetermined period.

When none of the first to third conditions described above is satisfied, the judgment in the step S3 is NO and the control returns to the process in the step S2. The process in the step S2 and the following processes are then repeated. That is, the basic function cards CB remain displayed in the lower right area of the touch screen 18 until at least one of the first to third conditions is satisfied. That is, the state of display on the touch screen 18 remains to be the state shown in Fig. 4.

Thereafter, when at least one of the first to third conditions is satisfied, the judgment in the step S3 is YES and the control proceeds to the process in the step S4.

In the step S4, the CPU 23 controls the digital signal processor 15 to delete the displayed basic function cards in the lower right area of the touch screen 18.

In the step S5, the CPU 23 judges whether or not the image capturing state is completed.

The judgment in the step S5 is NO as long as the state of the imaging apparatus remains to be the image capturing state. The control therefore returns to the process in the step S1, and the process in the step S1 and the following processes are repeated. That is, the loop process including the step S1 through the step S5 is repeated as long as the state of the imaging apparatus remains to be the image capturing state.

Thereafter, when the state of the imaging apparatus transitions from the image capturing state to another state, the judgment in the step S5 is YES and the basic function calling process is terminated.

While the basic function calling process has been described above, the basic function call and the application function call can be concurrently carried out under a certain condition. That is, in the present embodiment, since more detailed functions of the basic functions are defined in the application functions, the application function cards CA can be displayed only when the basic function cards CB are displayed.

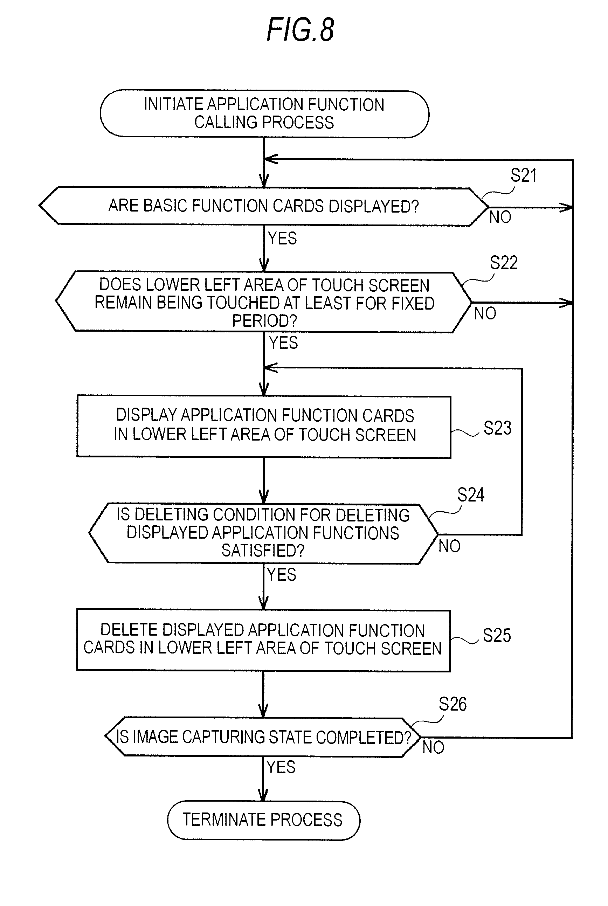

In this case, for example, the basic function calling process shown in Fig. 7 is carried out concurrently with the application function calling process shown in Fig. 8. That is, Fig. 8 is a flowchart describing an example of the application function calling process.

When the state of the imaging apparatus action transitions to the image capturing state, the application function calling process shown in Fig. 8, along with the basic function calling process shown in Fig. 7, is initiated.

In the step S21, the CPU 23 judges whether or not the basic function cards CB are displayed.

When no basic function card CB is displayed, the judgment in the step S21 is NO and the control returns to the process in the step S21. The process in the step S21 and the following processes are then repeated. That is, the process in the step S21 is repeated until the basic function cards CB are displayed in the lower right area of the touch screen 18.

Thereafter, for example, when the process in the step S2 in the basic function calling process shown in Fig. 7 is carried out so that the basic function cards CB are displayed in the lower right area of the touch screen 18, that is, when the state of display on the touch screen 18 transitions to the state shown in Fig. 4, the judgment in the step S21 is YES and the control proceeds to the process in the step S22.

In the step S22, the CPU 23 judges whether or not a lower left area of the touch screen 18 remains being touched at least for a predetermined period.

That is, when the state shown in Fig. 5 continues at least for a predetermined period, specifically, when the user' finger f2 keeps touching a lower left area of the touch screen 18 at least for a predetermined period, the CPU 23 keeps receiving a coordinate signal for the predetermined period from the touch panel 16, which forms the touch screen 18.

Therefore, unless the CPU 23 keeps receiving the coordinate signal for the predetermined period, the judgment in the step S22 is NO and the control returns to the process in the step S21. The process in the step S21 and the following processes are then repeated.

Thereafter, when the CPU 23 keeps receiving the coordinate signal (a signal representing the coordinates of the lower left area) for the predetermined period from the touch panel 16, which forms the touch screen 18, with the basic function cards CB displayed, the judgment in the step S22 is YES, that is, it is judged that the lower left area of the touch screen 18 remains being touched at least for the predetermined period, and the control proceeds to the process in the step S23.

In the step S23, the CPU 23 controls the digital signal processor 15 to display the application function cards CA in the lower left area of the touch screen 18. That is, the state of display on the touch screen 18 transitions from the state shown in Fig. 5 to the state shown in Fig. 6.

In the step S24, the CPU 23 judges whether or not the deleting condition for deleting the displayed application functions is satisfied.

The deleting condition for deleting the displayed application functions is not limited to a specific one. For example, the deleting condition employed in the present embodiment is satisfied when at least one of the following first to third conditions is satisfied.

A first condition is defined as follows: The user presses the shutter button 42 with the application function cards CA displayed (and with the basic function cards CB also displayed in this case).

A second condition is defined as follows: The user touches a monitoring screen area of the touch screen 18 except the area where the basic function cards CB and the application function cards CA are displayed.

A third condition is defined as follows: The touch screen 18 does not detect that at least one of the fingers f1 and f2 has touched a lower right area or a lower left area of the touch screen 18 (a lower right area and a lower left area when both the basic function cards CB and the application function cards CA are displayed) for a predetermined period. The reason why the description "at least one of the fingers f1 and f2" is made is that the third condition is also satisfied in the following case: The touch screen 18 does not detect that the finger f1 has touched it; as a result, the judgment in the step S3 in Fig. 7 is YES; and the basic function cards CB are deleted in the process in the step S4.

When none of the first to third conditions described above is satisfied, the judgment in the step S24 is NO and the control returns to the process in the step S23. The process in the step S23 and the following processes are then repeated. That is, the application function cards CA remain displayed in the lower left area of the touch screen 18 until at least one of the first to third conditions is satisfied. Further, when none of the first to third conditions described above is satisfied, none of the deleting conditions for deleting the displayed basic functions is also satisfied in the step S3 in Fig. 7. The basic function cards CB therefore remain displayed in the lower right area of the touch screen 18. That is, the state of display on the touch screen 18 remains to be the state shown in Fig. 6.

Thereafter, when at least one of the first to third conditions is satisfied, the judgment in the step S24 is YES and the control proceeds to the process in the step S25.

In the step S25, the CPU 23 controls the digital signal processor 15 to delete the displayed application function cards CA in the lower left area of the touch screen 18.

When the judgment in the step S24 is YES in response to the user's action of pressing the shutter button 42 or the user' s action of touching a monitoring screen area of the touch screen 18 except the area where the basic function cards CB and the application function cards CA are displayed, and hence the application function cards CA are deleted in the process in the step S25, the judgment in the step S3 in Fig. 7 is YES and the basic function cards CB are also deleted in the process in the step S4.

In contrast, when the judgment in the step S24 is YES in response to the fact that the touch screen 18 does not detect that the finger f2 has touched a lower left area of the touch screen 18 for a predetermined period with the touch screen 18 detecting that the finger f1 remains touching the lower right area of the touch screen 18, and hence the application function cards CA are deleted in the process in the step S25, the judgment in the step S3 in Fig. 7 is NO and the control returns to the process in the step S2. As a result, the basic function cards CB remain displayed.

In either case, the application function cards displayed in the lower left area of the touch screen 18 are deleted, and the control proceeds from the process in the step S25 to the process in the step S26.

In the step S26, the CPU 23 judges whether or not the image capturing state is completed.

The judgment in the step S26 is NO as long as the state of the imaging apparatus remains to be the image capturing state. The control therefore returns to the process in the step S21, and the process in the step S21 and the following processes are repeated. That is, the loop process including the step S21 through the step S26 is repeated as long as the state of the imaging apparatus remains to be the image capturing state.

Thereafter, when the state of the imaging apparatus transitions from the image capturing state to another state, the judgment in the step S26 is YES and the application function calling process is terminated. In this case, the basic function calling process shown in Fig. 7 is also terminated.

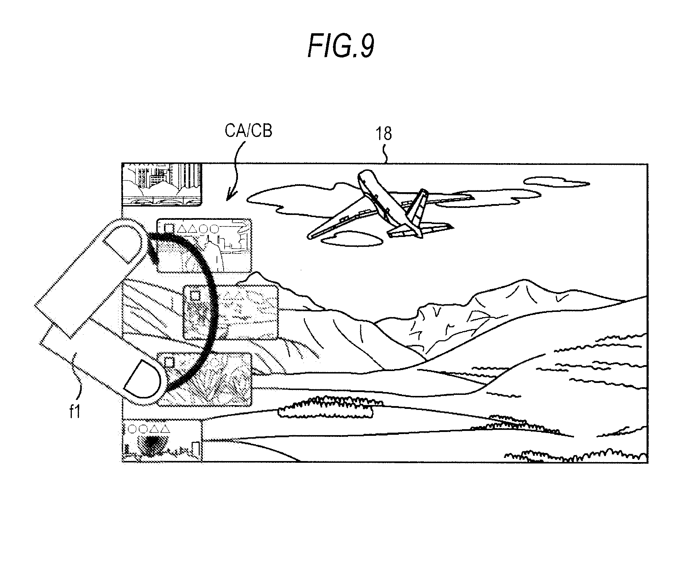

An example the operations of calling a basic function and an application function of the imaging apparatus and an example of the calling processes corresponding to the above operations have been described with reference to Figs. 3 to 8. However, the operations of calling a basic function and an application function of the imaging apparatus are not limited to the example described above. For example, Fig. 9 describes an example of the operations of calling a basic function and an application function of the imaging apparatus but different from the example shown in Figs. 3 to 6.

In Fig. 9, the user traces a left-side portion of the touch screen 18 of the imaging apparatus with the finger f1 in the down-to-up direction. The application function cards CA/basic function cards CB are then sequentially displayed along a lower-to-upper area of the left-side portion of the touch screen 18 touched with the finger f1.

To delete the displayed application function cards CA/basic function cards CB, the user traces the left-side portion of the touch screen 18 of the imaging apparatus with the finger f1 in the up-to-down direction with the application function cards CA/basic function cards CB displayed. The application function cards CA/basic function cards CB are then sequentially deleted along the upper-to-lower area of the left-side portion of the touch screen 18 touched with the finger f1.

The direction of the tracing operation is, of course, not limited to a specific direction, but the directions described above may be reversed. That is, the application function cards CA/basic function cards CB are displayed in the up-to-down direction, whereas they are deleted in the down-to-up direction.

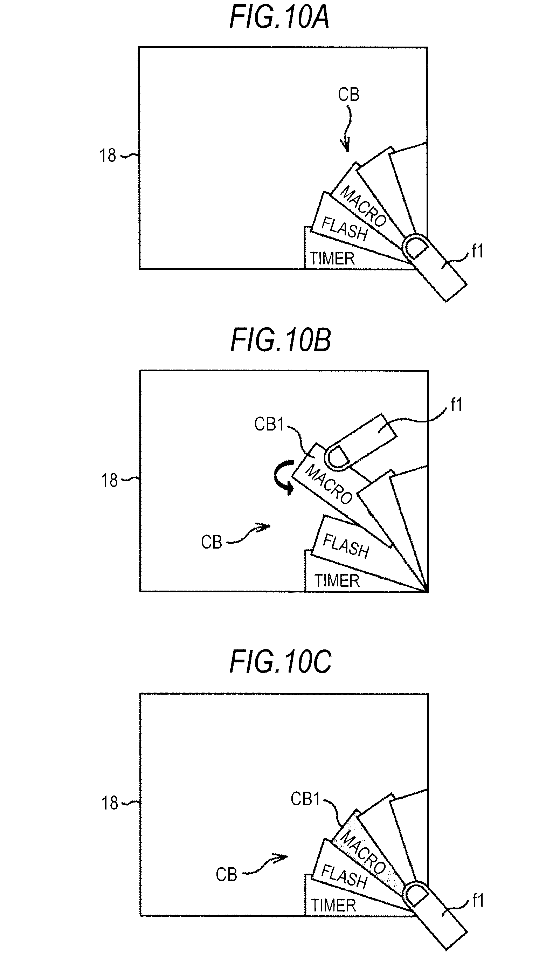

Exemplary operations of setting a basic function or an application function will be described with reference to Figs. 10A to 13B. In the following description, an exemplary operation of setting a basic function will be described, but no description of an exemplary operation of setting an application function will be made in order to simplify the description. The reason for this is that the operation of setting an application function is basically the same as the operation of setting a basic function, which will be described below.

Figs. 10A to 10C describe an exemplary operation of setting a basic function.

Setting a basic function in the present embodiment includes turning the function off and turning the function on. Turning the function off means that the basic function is disabled. On the other hand, turning the function on means that the basic function is enabled so that it is performed through an operation.

Fig. 10A shows the state in which a plurality of basic function cards CB is displayed. That is, Fig. 10A shows the same state as that shown in Fig. 4. Specifically, as a result of the user's action of keeping touching a lower right area of the touch screen 18 with the finger f1 at least for a predetermined period, the plurality of basic function cards CB is displayed.

In Fig. 10B, the user selects a basic function card CB1 on which a basic function the user wants to set is displayed. That is, the user touches the basic function card CB1 with the finger f1 and pulls it out upward, as shown in Fig. 10B. The basic function card CB1 is thus selected. That is, pulling out the basic function card CB1 corresponds to selecting the basic function card CB1.

Judging whether or not the basic function card CB1 is being pulled out can be made by using the CPU 23 to monitor a coordinate signal from the touch panel 16, which forms the touch screen 18. That is, the CPU 23 can derive the path of the finger f1 from the time-series coordinate signals. The CPU 23 then detects whether or not the basic function card CB1 is being pulled out based on the derivation result. The CPU 23 controls the digital signal processor 15 to produce an image showing the basic function card CB1 moving along the path of the finger f1 and display the image on the touch screen 18. Alternatively, animation may be used to express the basic function card CB1 being pulled out. The processes carried out by the CPU 23 described above are carried out in the same manner in other GUI operations, which will be described later.

The user then sets the basic function. That is, the user uses the finger f1 to turn over the basic function card CB1 so that the front and back sides are reversed. The operation of turning over the basic function card CB1 can be, for example, an operation of tapping the basic function card CB1 once with the finger f1 (single tapping).

The fact that the basic function card CB1 shows its front side means that the basic function displayed on the card is turned on. In contrast, the fact that the basic function card CB1 shows its back side means that the basic function displayed on the card is turned off. Since the basic function card CB1 is turned over so that the back side appears in the example shown in Figs. 10A to 10C, the basic function displayed on the card is changed from the turned-on state to the turned-off state.

That is, in the example shown in Figs. 10A to 10C, the basic function card CB1 on which words "macro function" are displayed is selected so that the basic function card CB1 is turned over. The macro function is therefore is set to the turned-off state.

As shown in Fig. 10C, the basic function card CB1 having been turned over so that the function is turned off is displayed in a different form so that the basic function card CB1 is differentiated from other basic function cards CB with their functions turned on. The form itself in which a card is displayed is not limited to a specific one as long as the form in which a card with its function turned on differs from the form in which the card with its function turned off. In the example shown in Figs. 10A to 10C, the basic function cards CB with their functions turned on (including the basic function card CB1 shown in Figs. 10A and 10B) are displayed in white. In contrast, the basic function card CB1 with its function turned off is displayed in gray.

The turned-off function of the basic function card CB1 can be turned back on by carrying out the series of operations described with reference to Figs. 10A to 10C, that is, the operation of reselecting the basic function card CB1 and the operation of turning over again the basic function card CB1 so that the front side appears.

In the present embodiment, setting a basic function includes turning the function on and turning the function off. Some of the basic functions, however, may not be fully expressed by the expressions of turning the functions on and off. For such a basic function, settable items may be displayed on the back side of the corresponding basic function card CB. In this case, the user may turn over the basic function card CB and then select a desired item to set the function.

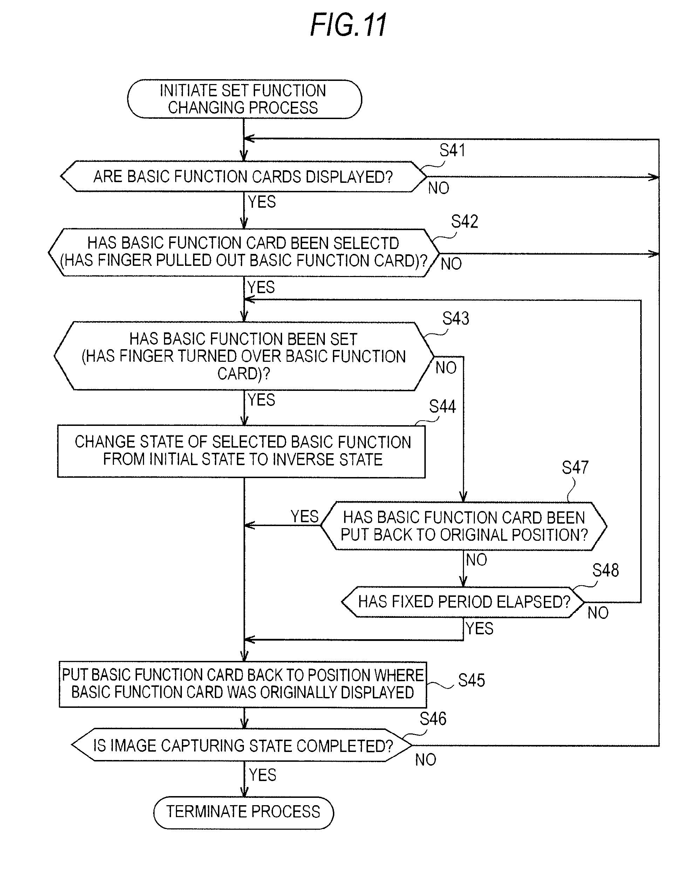

Fig. 11 is a flowchart describing, among the processes carried out in the imaging apparatus shown in Fig. 1, an exemplary process to be carried out in response to the operation of setting a basic function shown in Figs. 10A to 10C (hereinafter referred to as a set function changing process). It is noted that an application function can be set in the same manner as a basic function by replacing the words "basic function" with the words "application function" in each step described below.

The set function changing process is also initiated when the state of the imaging apparatus action transitions to the image capturing state.

In the step S41, the CPU 23 judges whether or not the basic function cards CB are displayed.

When no basic function card CB is displayed, the judgment in the step S41 is NO and the control returns to the process in the step S41. The process in the step S41 and the following processes are then repeated. That is, the process in the step S41 is repeated until the basic function cards CB are displayed in the lower right area of the touch screen 18.

Thereafter, for example, when the process in the step S2 in the basic function calling process shown in Fig. 7 is carried out so that the basic function cards CB are displayed in the lower right area of the touch screen 18, that is, when the state of display on the touch screen 18 transitions to the state shown in Fig. 4, the judgment in the step S41 is YES and the control proceeds to the process in the step S42.

In the step S42, the CPU 23 judges whether or not the basic function card CB1 has been selected (the finger f1 has pulled out the basic function card CB1).

When the finger f1 has not pulled out the basic function card CB1, the judgment in the step S42 is NO and the control returns to the process in the step S41. The process in the step S41 and the following processes are then repeated. That is, the loop process including the steps S41 and S42 is repeated until the finger f1 pulls out the basic function card CB1 with the basic function card CB1 displayed.

Thereafter, when the user touches the basic function card CB1 with the finger f1 with the finger f1 and pulls it out upward as shown in Fig. 10B, the judgment in the step S42 is YES and the control proceeds to the process in the step S43.

In the step S43, the CPU 23 judges whether or not the basic function has been set (the finger f1 has turned over the basic function card CB1).

When the finger f1 has not turned over the basic function card CB1, the judgment in the step S43 is NO and the control proceeds to the process in the step S47. The process in the step S47 and the following processes will be described later.

On the other hand, when the user has turned over the basic function card CB1 with the finger f1 so that the front and back sides are reversed as shown in Fig. 10B, the judgment in the step S43 is YES and the control proceeds to the process in the step S44.

In the step S44, the CPU 23 changes the state of the selected basic function from the initial state to the inverse state.

That is, when the basic function card CB1 has been turned over so that the back side appears, the CPU 23 changes the state of the basic function to the turned-off state, because the initial state of the basic function displayed on the card (selected basic function) is the turned-on state of the basic function.

On the other hand, when the basic function card CB1 has been turned over so that the front side appears, the CPU 23 changes the state of the basic function to the turned-on state, because the initial state of the basic function displayed on the card (selected basic function) is the turned-off state of the basic function.

When the process in the step S44 is completed, the control proceeds to the process in the step S45.

In the step S45, the CPU 23 controls the digital signal processor 15 to put the basic function card CB1 back to the position where it was originally displayed. That is, the digital signal processor 15 puts the basic function card CB1 having been pulled out in the process in the step S42 back into the lower right area of the touch screen 18, which is the position where the basic function card CB1 was originally displayed.

In the step S46, the CPU 23 judges whether or not the image capturing state is completed.

The judgment in the step S46 is NO as long as the state of the imaging apparatus remains to be the image capturing state. The control therefore returns to the process in the step S41, and the process in the step S41 and the following processes are repeated. That is, the loop process including the step S41 through the step S46 is repeated as long as the state of the imaging apparatus remains to be the image capturing state.

Thereafter, when the state of the imaging apparatus transitions from the image capturing state to another state, the judgment in the step S46 is YES and the set function changing process is terminated. In this case, the basic function calling process shown in Fig. 7 is also terminated.

The description has been made of the series of processes to be carried out when it is judged in the process in the step S42 that the basic function card CB1 has been selected and it is further judged in the process in the step S43 that the basic function has been set.

On the other hand, when it is judged in the process in the step S42 that the basic function card CB1 has been selected and it is further judged in the process in the step S43 that the basic function has not been set, the control proceeds to the process in the step S47 and the following process is carried out.

In the step S47, the CPU 23 judges whether or not the touch screen detects a user's action of putting the basic function card CB1 back to its original position.

When the basic function card CB1 has been put back to its original position, the judgment in the step S47 is YES and the control proceeds to the process in the step S45. That is, in the process in the step S45, the basic function card CB1 having been pulled out in the process in the step S42 is put back into the lower right area of the touch screen 18, which is the position where the basic function card CB1 was originally displayed. The control then proceeds to the process in the step S46. Since the process in the step S46 and the following processes have been already described, no description thereof will be made.

On the other hand, when the basic function card CB1 has not been put back to its original position, the judgment in the step S47 is NO and the control proceeds to the process in the step S48.

In the step S48, the CPU 23 judges whether or not a predetermined period has elapsed since the basic function card CB1 was pulled out in the process in the step S42.

That is, the CPU 23 judges whether or not no operation is carried out on the basic function card CB1 having been pulled out in the step S42 but a predetermined period has elapsed.

When the predetermined period has not elapsed, the judgment in the step S48 is NO and the control returns to the process in the step S43. The process in the step S43 and the following processes are then repeated.

When no operation has been carried out on the basic function card CB1 since it was pulled out in the step S42, the loop process including NO in the step S43, NO in the step S47, and NO in the step S48 is repeated.

When no operation has been still carried out on the basic function card CB1 since then but the predetermined period has elapsed, the judgment in the step S48 is YES and the control proceeds to the process in the step S45. That is, when no operation has been carried out on the basic function card CB1 having been pulled out in the step S42 but the predetermined period has elapsed, the basic function card CB1 is put back into the lower right area of the touch screen 18, which is the position where the basic function card CB1 was originally displayed, in the process in the step S45. The control then proceeds to the process in the step S46. Since the process in the step S46 and the following processes have been already described, no description thereof will be made.

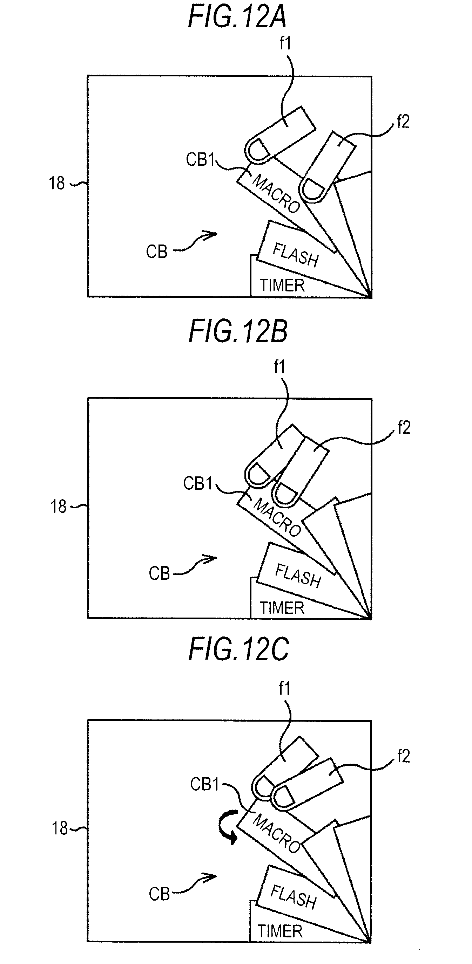

An example of the operation of setting a basic function has been described with reference to Figs. 10A and 10C, and then the set function changing process corresponding to the operation in the example shown in Figs. 10A to 10C has been described with reference to Fig. 11. The operation of setting a basic function is, however, not particularly limited to the operation in the example shown in Figs. 10A to 10C. Another example of the operation of setting a basic function will be described with reference to Figs. 12A to 13B.

Figs. 12A to 12C describe an example of the operation of setting a basic function but different from the example shown in Figs. 10A to 10C.

In Fig. 12A, the user selects a basic function card CB1 on which a basic function the user wants to set is displayed. That is, the user touches the basic function card CB1 with fingers f1 and f2 and pulls it out upward, as shown in Fig. 12A. The basic function card CB1 is thus selected. That is, pulling out the basic function card CB1 with the fingers f1 and f2 corresponds to selecting the basic function card CB1. It is noted that selecting the basic function card CB1 may be carried out by pulling it out by only the finger f1, as shown in Fig. 10B.

The user then sets the basic function. That is, the user uses the fingers f1 and f2 to turn over the basic function card CB1 so that the front and back sides are reversed. In the example shown in Figs. 12A to 12C, the user moves the finger f1 to the upper end of the basic function card CB1 and narrows the distance between the fingers f1 and f2, as shown in Figs. 12B and 12C. The selected basic function card CB1 is then turned over (the selected basic function card CB1 is displayed as if it were turned over).

In the example shown in Figs. 12A to 12C, the basic function card CB1 on which words "macro function" are displayed is selected so that the basic function card CB1 is turned over. The macro function is therefore set to the turned-off state.

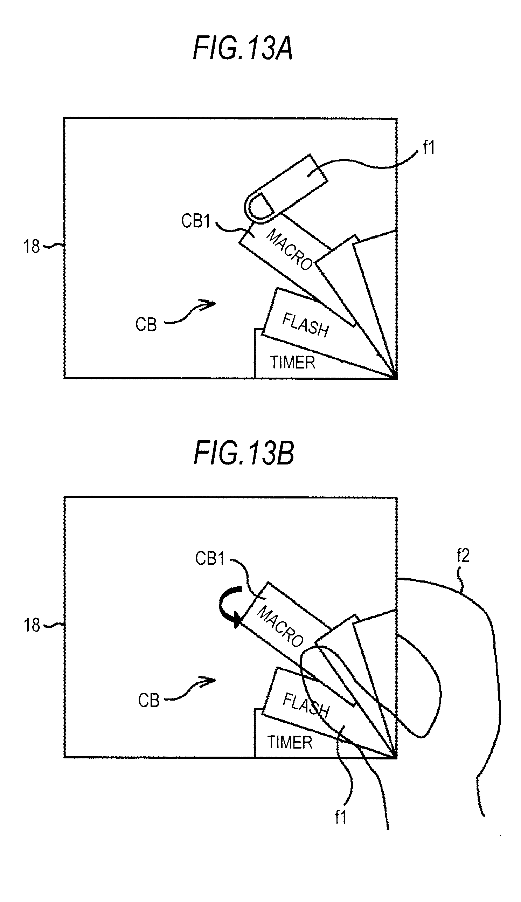

Figs. 13A and 13B describe an example of the operation of setting a basic function but different from the examples shown in Figs. 10A to 10C and Figs. 12A to 12C.

In the example shown in Figs. 13A and 13B, the touch panel 28 disposed on the front side (on the side where the lens unit 11 is disposed) of the imaging apparatus is used. As described above, the touch panel 28 is disposed on the side that is opposite the touch screen 18 (see Figs. 2A and 2B).

In Fig. 13A, the user selects a basic function card CB1 on which a basic function the user wants to set is displayed. That is, the user touches the basic function card CB1 with the finger f1 and pulls it out upward, as shown in Fig. 13A. The basic function card CB1 is thus selected. That is, pulling out the basic function card CB1 corresponds to selecting the basic function card CB1.

The user then sets the basic function. That is, the user uses the fingers f1 and f2 to turn over the basic function card CB1 so that the front and back sides are reversed. In the example shown in Figs. 13A and 13B, the user taps once the touch panel 28 formed on the imaging lens side of the imaging apparatus (single tapping) with the finger f2 while touching the basic function card CB1 having been pulled out with the finger f1, as shown in Fig. 13B. The selected basic function card CB1 is then turned over (the selected basic function card CB1 is displayed as if it were turned over).

In the example shown in Figs. 13A and 13B, the basic function card CB1 on which words "macro function" are displayed is selected so that the basic function card CB1 is turned over. The macro function is therefore set to the turned-off state.

The operation of setting a basic function is not limited to that in the example shown in Figs. 13A and 13B.

For example, in the example shown in Figs. 13A and 13B, the user touches the basic function card CB1 with the finger f1 to turn over the basic function card CB1 so that the front and back sides are reversed. In this case, however, the finger f1 does not need to touch the basic function card CB1. For example, the operation of turning over the basic function card CB1 so that the front and back sides are reversed may be carried out as follows: The user pulls out the basic function card CB1 with the finger f1, releases the finger f1 from the basic function card CB1, and taps once the touch panel 28 with the finger f2 (single tapping).

As described above, the imaging apparatus to which the invention is applied displays objects mimicking cards in the real life (the basic function cards CB and the application function cards CA in the example described above) in order to display a variety of imaging-related functions. In this way, the variety of imaging-related functions can be presented to the user in an easy-to-use method. As a result, the user can intuitively understand the variety of imaging-related functions.

For example, there are front and rear sides in the concept of a card in the real life. Therefore, the user can readily understand the method in the examples shown in Figs. 10A to 13B, that is, the method of turning over a basic function card CB or an application function card CA on the touch screen 18 so that the back side appears in order to set the state of the corresponding function from the turned-on state to the turned-off state.

The series of processes described above may be carried out by hardware or software.

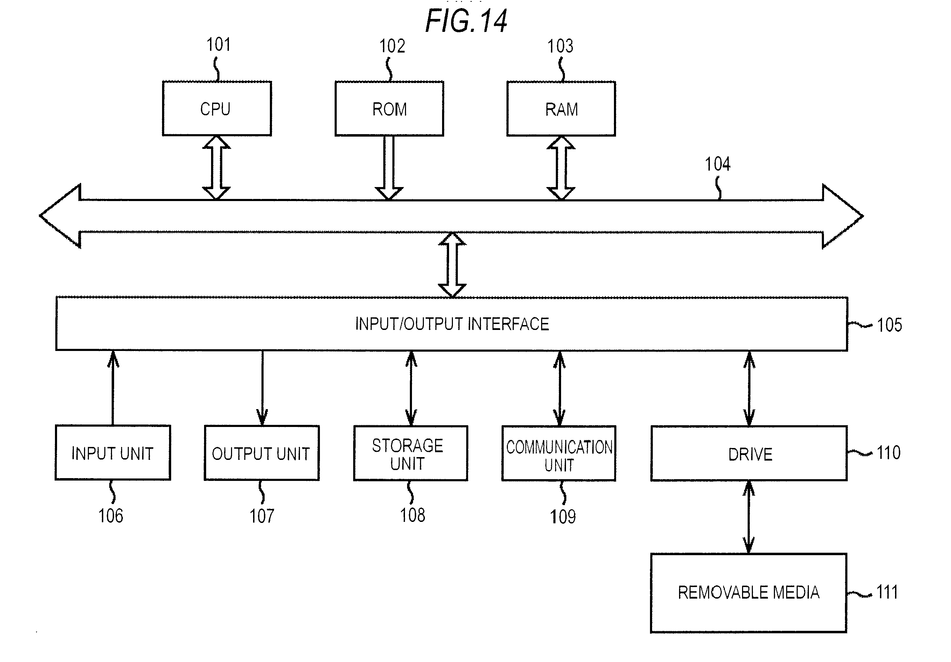

In this case, the series of processes described above may of course be carried out by the imaging apparatus shown in Fig. 1, or may be carried out, for example, by a personal computer shown in Fig. 14.

In Fig. 14, a CPU 101 carries out a variety of processes in accordance with programs recorded in a ROM (Read Only Memory) 102 or programs loaded from a storage unit 108 to a RAM (Random Access Memory) 103. Further, the RAM 103 as appropriate stores data necessary for the CPU 101 to carry out the variety of processes.

The CPU 101, the ROM 102, and the RAM 103 are connected to one another via a bus 104. An input/output interface 105 is also connected to the bus 104.

The input/output interface 105 is connected to an input unit 106 formed of a keyboard, a mouse, and other components, an output unit 107, the storage unit 108 formed of a hard disc drive and other components, and a communication unit 109 formed of a modem, a terminal adapter, and other components. The communication unit 109 controls communication with other apparatus (not shown) via a network including the Internet.

The input/output interface 105 is also connected to a drive 110 as necessary, into which a removable medium 111, such as a magnetic disk, an optical disk, a magneto-optical disc, and a semiconductor memory, is loaded as appropriate. Computer programs read from any of the above media are installed in the storage unit 108 as necessary.

When the series of processes are carried out by software, programs that form the software are installed via the network or by any of the recording media, for example, to a computer incorporated in dedicated hardware or a general-purpose personal computer that can perform a variety of functions by installing a variety of programs.

As shown in Fig. 1 or 14, recording media containing such programs are formed of not only the removable medium (packaged medium) 111 (Fig. 14) distributed to users to provide the programs separately from the apparatus body, such as a magnetic disk (including a floppy disk), an optical disk (including a CD-ROM (Compact Disk-Read Only Memory) and a DVD (Digital Versatile Disk)), a magneto-optical disk (including an MD (Mini-Disk)), and a semiconductor memory, on which the programs are recorded, but also the program ROM 26 shown in Fig. 1, the ROM 102, a hard disk contained in the storage unit 108 shown in Fig. 14, and other components, which are incorporated in advance in the apparatus body and provided to the users and on which the programs are recorded.

In the present specification, the steps describing the programs recorded in any of the recording media include not only processes that are sequentially carried out in a time-series manner but also processes that are not necessarily carried out in a time-series manner but are carried out concurrently or individually.

The above description has been made with reference to the case where a display device in which the display operation is controlled by the information processing apparatus to which the invention is applied is a liquid crystal display device, specifically, the liquid crystal display panel 17. The invention is also applicable to not only a liquid crystal display panel but also a display device configured as follows: the display operation is instructed on a frame or field basis (frames or fields form video images and each of the frames or fields is hereinafter referred to as a segment); a plurality of pixels that form a single segment are formed of display elements; and at least part of the display elements can remain in a display state. The display elements described above are hereinafter referred to as hold-type display elements, and a display device having a screen formed of hold-type display elements is hereinafter referred to as a hold-type display device. That is, a liquid crystal display device has been presented only by way of example of a hold-type display device, and the invention is applicable to any hold-type display device.

Further, the invention is applicable to not only a hold-type display device but also, for example, a flat-panel, self-luminous display device using organic EL (Electro Luminescent) devices as light-emitting elements. That is, the invention is applicable to any display device including display elements that display a plurality of pixels that form an image. The display device described above is referred to as a pixel-type display device. In a pixel-type display device, a single pixel is not, in particular, necessarily related to a single display element.

In other words, a display device in which the display operation is controlled by the information processing apparatus to which the invention is applied only needs to be a display device capable of carrying out the series of processes described above.

The present application contains subject matter related to that disclosed in Japanese Priority Patent Application JP 2008-206623 filed in the Japan Patent Office on August 11, 2008, the entire contents of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus comprising:
touch screen means including a touch panel and a panel; and
display control means for performing display control of displaying a symbol representing a first function in a first area of the touch screen means when the touch screen means detects that the first area is touched, whereas displaying a symbol representing a second function in a second area of the touch screen means when the touch screen means detects that the second area is touched with the first area remaining being touched.

2. The information processing apparatus according to claim 1,
wherein the display area of the touch screen means is divided into an upper right area, an upper left area, a lower right area, and a lower left area, and
the lower right area is the first area and the lower left area is the second area.

3. The information processing apparatus according to claim 1 or 2,
wherein the display control means performs the display control of displaying the symbol representing the first or second function when the first or second area remains being touched at least for a predetermined period.

4. The information processing apparatus according to claim 1, 2 or 3,
wherein the display control means further performs the display control of deleting the displayed symbol representing the first function when a first deleting condition is satisfied, whereas deleting the displayed symbol representing the second function when a second deleting condition is satisfied.

5. The information processing apparatus according to claim 4,
wherein the second deleting condition includes a condition that the symbol representing the first function is deleted.

6. The information processing apparatus according to one of the claims 1 to 5,
wherein the first function is a set of a plurality of functions and the symbol representing the first function includes first function cards for the respective plurality of functions, each of the first function cards being an object mimicking a card representing a predetermined function, and
the second function is a set of a plurality of functions and the symbol representing the second function includes second function cards for the respective plurality of functions, each of the second function cards being an object mimicking a card representing a predetermined function.

7. The information processing apparatus according to claim 6,
further comprising function setting means,
wherein when a card used to carry out a function setting operation is selected on the touch screen means from the plurality of first function cards and the plurality of second function cards and then a setting operation instructing the touch screen means to set a function identified by the card, the function setting means set the function, and
the display control means further performs the display control, when the setting operation is performed, of displaying an image in which the selected card is turned over on the touch screen means.

8. The information processing apparatus according to claim 7,
wherein the setting operation is a finger's single tapping operation performed on the selected card or an operation of narrowing the distance between two fingers that touch the selected card.

9. The information processing apparatus according to claim 7 or 8,
further comprising touch panel means disposed on the opposite surface of the information processing apparatus to the surface on which the touch screen means is disposed,
wherein the setting operation is a finger's single tapping operation performed on the touch panel means.

10. An information processing method used with an information processing apparatus including a touch screen formed of a touch panel and a panel, the method comprising the step of:
displaying a symbol representing a first function in a first area of the touch screen when the touch screen detects that the first area is touched, whereas displaying a symbol representing a second function in a second area of the touch screen when the touch screen detects that the second area is touched with the first area remaining being touched.

11. A program causing a computer controlling an information processing apparatus including a touch screen formed of a touch panel and a panel to carry out a control process including the step of:
displaying a symbol representing a first function of the information processing apparatus in a first area of the touch screen when the touch screen detects that the first area is touched, whereas displaying a symbol representing a second function of the information processing apparatus in a second area of the touch screen when the touch screen detects that the second area is touched with the first area remaining being touched.
